# EUROPEAN PATENT APPLICATION

(11) **EP 4 811 082 A1**
(43) Date of publication of application: **23.09.2026**
(21) Application number: 25849873.2
(22) Date of filing: 13.02.2025
(51) Int. Cl.: G06F 3/0354, G06F 3/041

(54) **STYLUS AND STRAIN GAUGE ASSEMBLY**

(30) Priority: 06.08.2024 CN 202411073629; 06.08.2024 CN 202411078727
(71) Applicant: Shenzhen Qianfenyi Intelligent Technology Co., Ltd, Shenzhen, Guangdong 518000 (CN)
(72) Inventor: HUANG, Yanxin, Shenzhen, Guangdong 518000 (CN); CHEN, Liangwu, Shenzhen, Guangdong 518000 (CN); ZHAN, Ziyu, Shenzhen, Guangdong 518000 (CN)
(74) Representative: Vitina, Maruta
(86) International application number: PCT/CN2025/077156
(87) International publication number: WO 2026/031502

(57) **Abstract**

A stylus includes a barrel, a main frame, a tip, a main shaft assembly, a strain gauge, a control assembly and a sensing frame. The main shaft assembly is connected to the tip. The control assembly is electrically connected to the strain gauge. The sensing frame includes a deformation beam and at least one cantilever connected. The deformation beam is connected to the main frame. The cantilever is connected to the main shaft assembly, and the strain gauge is disposed on the deformation beam. When the tip moves relative to the barrel along the preset direction, the main shaft assembly drives the cantilever to move to cause the deformation beam and the strain gauge to undergo elastic deformation, and the control assembly detects the elastic deformation to obtain a writing force of the tip relative to a screen. A strain gauge assembly is also provided.

## Description

### TECHNICAL FIELD

This application relates to a stylus and a strain gauge assembly.

### BACKGROUND

With the explosive growth of screen-based electronic devices such as smartphones and tablet computers, styluses have been developed and have emerged as useful tools for facilitating user interaction with screens.

In related technologies, stylus operation often involves pressure detection. For example, the stylus detects a force applied to the screen to determine whether it is in use; or, during the drawing process, the stylus detects a force applied to the screen to control the thickness of the stroke.

A pressure detection device of the stylus includes a deformable frame and a strain gauge attached to a strain-acquisition position of the deformable frame, such that when a tip of the stylus is pressed against a screen, the tip will exert a force to deform the deformable frame, and the strain gauge will generate a corresponding strain. Subsequently, the strain gauge converts the strain signal into an electrical signal to obtain a current pressure value of the tip. However, the existing deformable frame typically adopts a parallelogram linkage structure, which results in relatively high structural complexity.

### SUMMARY

This application aims to solve at least one of the technical problems existing in the prior art. To this end, this application provides a stylus with reduced structural complexity. Technical solutions of this application are described as follows.

In a first aspect, this application provides a stylus, comprising:
a barrel;
a main frame;
a tip;
a main shaft assembly;
a strain gauge;
a control assembly; and
a sensing frame;
wherein the main frame is disposed within the barrel; and the tip is disposed on the main frame, and is configured to at least partially extend out of the barrel;
the main shaft assembly is disposed on the main frame, and is connected to the tip; and the main shaft assembly is configured to enable the tip to move relative to the barrel along a preset direction in response to a case that the stylus performs writing operation on a screen; the control assembly is electrically connected to the strain gauge; and
the sensing frame comprises a deformation beam and at least one cantilever connected to the deformation beam, the deformation beam extends along the preset direction and is connected to the main frame, the at least one cantilever is connected to the main shaft assembly, and the strain gauge is disposed on the deformation beam; and
in response to a case that the tip moves relative to the barrel along the preset direction, the main shaft assembly is configured to drive the at least one cantilever to move to cause the deformation beam and the strain gauge to undergo elastic deformation, and the control assembly is configured to detect the elastic deformation of the strain gauge to obtain a writing force of the tip relative to the screen.

In a second aspect, this application provides a strain gauge assembly, the strain gauge assembly being applied to the stylus, and the strain gauge assembly comprising:
a sensing frame; and
a strain gauge;
wherein the sensing frame comprises a deformation beam and at least one cantilever connected to the deformation beam; the deformation beam extends along a preset direction, and is connected to a main frame of the stylus, and the at least one cantilever is connected to a main shaft assembly of the stylus;
the strain gauge is disposed on the deformation beam; and
in response to a case that a tip of the stylus moves relative to a barrel of the stylus along the preset direction, the at least one cantilever is configured to be driven by the main shaft assembly of the stylus to move to cause the deformation beam and the strain gauge to undergo elastic deformation, and a control assembly of the stylus is configured to detect the elastic deformation of the strain gauge to obtain a writing force of the tip of the stylus relative to a screen.

As can be seen from the above technical solutions, in the stylus and the strain gauge assembly in this application, the sensing frame includes the deformation beam and at least one cantilever. The strain gauge is attached to the deformation beam, and the main shaft assembly is connected to at least one cantilever. With such an arrangement, the overall structure of the sensing frame is simple, and the difficulty of assembling the sensing frame in the stylus is effectively reduced, thereby reducing the manufacturing difficulty of the stylus. At the same time, as the sensing frame is a key component of the stylus, the overall structure of the stylus is simplified, thereby effectively reducing the cost of the stylus.

Furthermore, since the sensing frame includes the deformation beam and at least one cantilever, the space occupied by the sensing frame in the cross-section of the stylus is effectively reduced. Therefore, the cross-section of the barrel need not be designed to be large to meet the installation requirements of the sensing frame, allowing a slimmer stylus profile. Moreover, this eliminates the need to reserve a large receiving slot in the housing of the electronic device to accommodate the stylus, thereby ensuring the aesthetic appearance of the electronic device.

Furthermore, the main shaft assembly is connected to at least one cantilever. This arrangement minimizes interference with the movement of at least one cantilever when the main shaft assembly acts thereon, thereby ensuring that the main shaft assembly can push the deformation beam to undergo elastic deformation through at least one cantilever in an optimal manner, thus causing the strain gauge to undergo elastic deformation. Consequently, the corresponding electrical signal can be accurately obtained and sent to the control assembly. The control assembly then obtains the writing force of the tip relative to the screen based on the electrical signal corresponding to the elastic deformation of the strain gauge, thereby enabling the effective implementation of the present application.

In addition, during the assembly process of the stylus, the tip, the main shaft assembly, the sensing frame, the strain gauge, and the control assembly can be pre-installed on the main frame, and then the main frame is installed into the barrel. This configuration facilitates the assembly of the stylus.

### BRIEF DESCRIPTION OF THE DRAWINGS

In order to illustrate the technical solutions in the embodiments of the present disclosure or in the prior art more clearly, the drawings needed in the description of embodiments or the prior art will be briefly introduced below. Obviously, for those of ordinary skill in the art, other drawings can be obtained based on these drawings without paying creative efforts.
Fig. 1 is a schematic diagram showing an overall structure of a stylus according to an embodiment of the present disclosure;
Fig. 2 is an exploded view of the stylus according to Embodiment 1 of the present disclosure;
Fig. 3 is an exploded view showing a partial structure of the stylus according to Embodiment 1 of the present disclosure;
Fig. 4 is a schematic diagram showing a sensing frame and a strain gauge according to Embodiment 1 of the present disclosure;
Fig. 5 is a schematic diagram showing a partial assembly of the stylus according to Embodiment 1 of the present disclosure;
Fig. 6 is an exploded view of the stylus according to Embodiment 2 of the present disclosure;
Fig. 7 is an exploded view showing a partial structure of the stylus according to Embodiment 2 of the present disclosure;
Fig. 8 is an exploded view showing a sensing frame and a strain gauge according to Embodiment 2 of the present disclosure;
Fig. 9 is a schematic diagram of another strain gauge of the stylus according to Embodiment 2 of the present disclosure;
Fig. 10 is a schematic diagram showing a partial assembly of the stylus according to Embodiment 2 of the present disclosure;
Fig. 11 is an exploded view of the stylus according to Embodiment 3 of the present disclosure;
Fig. 12 is an exploded view showing a partial structure of the stylus according to Embodiment 3 of the present disclosure;
Fig. 13 is a schematic diagram showing a sensing frame and a strain gauge according to Embodiment 3 of the present disclosure;
Fig. 14 is a schematic diagram showing a partial assembly of the stylus according to Embodiment 3 of the present disclosure;
Fig. 15 is a schematic diagram of the sensing frame according to Embodiment 3 of the present disclosure;
Fig. 16 is a schematic diagram of another sensing frame and strain gauge of the stylus according to Embodiment 3 of the present disclosure;
Fig. 17 is a schematic diagram showing a structure and assembly of another sensing frame and the strain gauge of the stylus according to Embodiment 3 of the present disclosure; and
Fig. 18 is an exploded schematic diagram showing a main shaft assembly of the stylus according to an embodiment of the present disclosure.

In the drawings:
100, barrel; 200, main frame; 210, first bracket; 211, first boss; 212, second boss; 213, mounting protrusion; 220, second bracket; 300, tip; 400, main shaft assembly; 410, first shaft member; 411, guide hole; 420, second shaft member; 430, elastic member; 440, connector; 500, sensing frame; 510, first cantilever; 511, first fixing piece; 512, second fixing piece; 513, bent portion; 520, deformation beam; 521, concave portion; 530, second cantilever; 531, arc-shaped protrusion; 540, static beam; 550, third cantilever; 600, main board; 610, notch; 700, strain gauge; 710, flexible printed circuit (FPC); 711, strain segment; 712, connection segment; 713, static segment; 720, first bridge arm resistor; 730, second bridge arm resistor; 800, first electrode; 810, first spring member; 820, first extension arm; 900, second electrode; 910, second spring member; 920, second extension arm; MM', first direction; and NN', second direction.

### DETAILED DESCRIPTION OF EMBODIMENTS

The following describes in detail embodiments of the present disclosure, which are illustrated in the accompanying drawings. Identical or similar reference numerals throughout denote identical or similar elements or elements having identical or similar functions. The embodiments described below with reference to the accompanying drawings are exemplary, intended only to explain the present disclosure, and are not to be construed as limiting the present disclosure.

As used herein, it should be noted that the orientation or positional relationship indicated by the terms "upper", "lower", "front", "rear", "left", "right" etc., is based on the orientation or positional relationship shown in the accompanying drawings, which is only for the convenience of describing the technical solutions and simplifying the description, rather than indicating or implying that the indicated device or element must have a specific orientation, be constructed or operated in a specific orientation. Therefore, these terms should not be understood as a limitation of the present disclosure.

In the description of the present disclosure, "at least one" means one or more, and "multiple" or "a plurality of" means two or more. Terms such as "greater than", "less than", and "exceeding" are to be understood as excluding the number itself, while terms such as "above", "below" and "within" are to be understood as including the number itself. In addition, terms such as "first" and "second" are used, they are intended solely to distinguish technical features and should not be construed as indicating or implying relative importance, the number of the indicated technical features, or the sequence of the indicated technical features.

As used herein, unless otherwise expressly and specifically defined, terms such as "dispose", "install", and "connect" should be interpreted in a broad sense. Those of ordinary skill in the art may reasonably determine the specific meanings of these terms in the present disclosure based on the specific content of the technical solutions.

As used herein, descriptions with reference to the terms "an embodiment", "some embodiments", "illustrative embodiments", "examples", "specific examples", or "some examples" indicate that specific features, structures, materials, or characteristics described in connection with such an embodiment or example are included in at least one embodiment or example of the present disclosure. In this disclosure, the illustrative representations of the above terms do not necessarily refer to the same embodiment or example. Furthermore, the specific features, structures, materials, or characteristics described may be combined in any one or more embodiments or examples in an appropriate manner.

The present disclosure will be described in further detail with reference to the accompanying drawings.

A stylus provided in an embodiment of the present disclosure may be a capacitive stylus or an inductive stylus, but is not limited to only the two types mentioned above. The stylus may be applied to various electronic devices equipped with screens, such as mobile phones, tablets (or tablet computers), all-in-one computers, laptops, etc., which are not listed exhaustively herein.

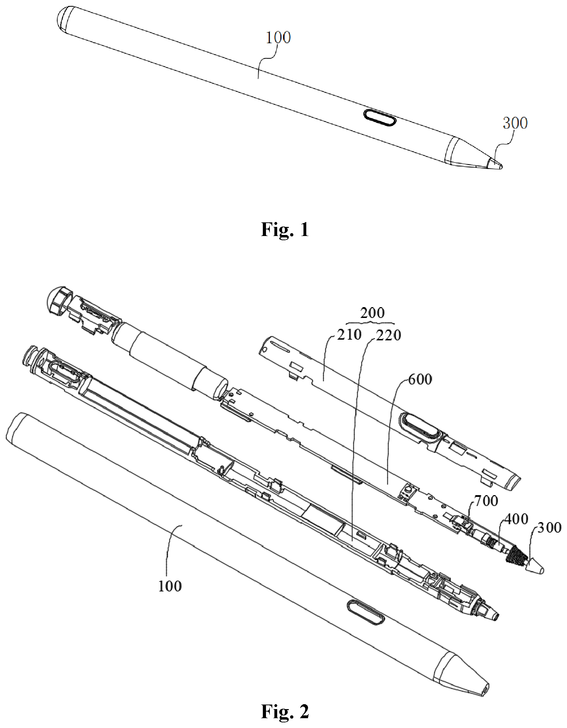

Referring to Figs. 1 to 4, the stylus includes a barrel 100, a main frame 200, a tip 300, a main shaft assembly 400, a sensing frame 500, a control assembly, and a strain gauge 700.

The barrel 100 serves as an outer housing of the stylus. The barrel 100 has a cylindrical structure. The specific material of the barrel 100 is not limited herein, and a designer can make a reasonable choice according to actual needs. For example, the material of the barrel 100 may include, but is not limited to, plastic.

The main frame 200 serves as a support structure of the stylus for carrying components such as the tip 300, the main shaft assembly 400, the sensing frame 500, the control assembly, and the strain gauge 700. The specific structure of the main frame 200 will be described in detail below.

The main frame 200 is disposed within the barrel 100. The specific connection manner between the main frame 200 and the barrel 100 is not limited herein, and a designer can make a reasonable design according to actual needs. For example, the main frame 200 may be detachably connected to the barrel 100 by at least one of screwing, snapping, or plugging, but is not limited thereto. Alternatively, the main frame 200 may be non-detachably connected to the barrel 100 by means of bonding, but is not limited thereto.

The tip 300 serves as a pen tip of the stylus for contacting a screen. The tip 300 is disposed on the main frame 200, and is configured to at least partially extend out of the barrel 100. For example, the tip 300 is axially slidably disposed on the main frame 200 and extends out from a head portion of the barrel 100.

The main shaft assembly 400 is configured to enable the tip 300 to move relative to the barrel 100 along a preset direction in response to a case that the stylus performs writing operation on the screen. Here, the preset direction may be understood as the axial direction of the stylus, or may be understood as the axial direction of the barrel 100.

The main shaft assembly 400 is disposed on the main frame 200, and is connected to the tip 300. For example, the main shaft assembly 400 is axially slidably disposed on the main frame 200, and the front end of the main shaft assembly 400 is connected to the connection end of the tip 300 (i.e., the rear end of the tip 300).

The sensing frame 500 is configured for supporting the strain gauge 700. The sensing frame 500 includes a deformation beam 520 and at least one cantilever connected to the deformation beam 520.

The deformation beam 520 extends along the preset direction and is connected to the main frame 200. The connection between the deformation beam 520 and the main frame 200 may be a direct connection, or an indirect connection via other components (such as a first cantilever 510 described below).

At least one cantilever is connected to the main shaft assembly 400. Thus, the cantilever connected to the main shaft assembly 400 (such as a second cantilever 530 described below) can move under the action of the main shaft assembly 400, causing the deformation beam 520 connected to that cantilever to undergo elastic deformation.

The strain gauge 700 is configured to undergo elastic deformation together with the deformation beam 520 when the deformation beam 520 undergoes elastic deformation. The specific structure of the strain gauge 700 will be described in detail below.

The strain gauge 700 is disposed on the deformation beam 520, so that during the elastic deformation of the deformation beam 520, the strain gauge 700 thereon can also undergo elastic deformation together with the deformation beam 520.

The control assembly serves as a control module of the stylus. The control assembly is electrically connected to the strain gauge 700. For example, the control assembly includes a main board 600, and the main board 600 is electrically connected to the strain gauge 700.

When the tip 300 moves relative to the barrel 100 along the preset direction, the main shaft assembly 400 is configured to drive at least one cantilever to move to cause the deformation beam 520 and the strain gauge 700 to undergo elastic deformation. Consequently, the control assembly is configured to detect the elastic deformation of the strain gauge 700 to obtain the writing force of the tip 300 relative to the screen.

During the pressure detection process, the front end of the tip 300 serves as the writing end against the screen, and the tip 300 receives a corresponding reaction force from the screen. The tip 300 transmits the reaction force to the cantilever via the main shaft assembly 400. Since the cantilever is connected to the deformation beam 520, and the deformation beam 520 is connected to the main frame 200, when the cantilever receives the force transmitted from the tip 300, the deformation beam 520 undergoes elastic deformation at a central position along its length direction. During the deformation of the deformation beam 520, the strain gauge 700 also undergoes corresponding deformation along with the elastic deformation of the deformation beam 520. The strain gauge 700 converts the amount of deformation into an electrical signal and sends it to the main board 600 of the control assembly. The main board 600 of the control assembly calculates, based on the received signal, the reaction force applied to the tip 300, i.e., the force applied by the tip 300 to the screen.

From the above, it can be seen that the sensing frame 500 is composed of the deformation beam 520 and at least one cantilever. The strain gauge 700 is attached to the deformation beam 520, and the main shaft assembly 400 is connected to at least one cantilever. With this arrangement, the overall structure of the sensing frame 500 is simple, and the difficulty of assembling the sensing frame 500 in the stylus is effectively reduced, thereby reducing the manufacturing difficulty of the stylus. At the same time, as a key component of the stylus, the sensing frame 500 simplifies the structure of the stylus, thereby effectively reducing the cost of the stylus.

In addition, because the sensing frame 500 is composed of the deformation beam 520 and at least one cantilever, the space occupied by the sensing frame 500 in the cross-section of the stylus is effectively reduced. Therefore, the cross-section of the barrel 100 need not be designed to be large to meet the installation requirements of the sensing frame 500, allowing the stylus to have a thinner size. In application, the housing of the electronic device does not need to reserve a large receiving slot to accommodate the stylus, thereby ensuring the appearance of the electronic device.

Furthermore, during the assembly process of the stylus, the tip 300, the main shaft assembly 400, the sensing frame 500, the strain gauge 700, and the main board 600 can be pre-installed on the main frame 200, and then the main frame 200 is installed into the barrel 100. This configuration facilitates the assembly of the stylus.

For different structures of the sensing frame 500, the specific structure of the strain gauge 700 may also vary. The specific structural designs of the strain gauge 700 may include, but are not limited to, the following embodiments.

### Embodiment 1

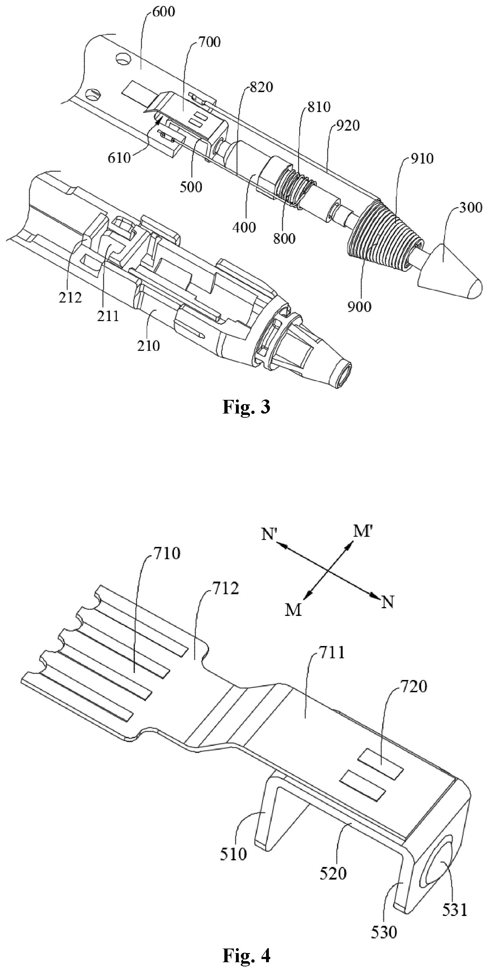

Referring to Figs. 3 to 5, when the sensing frame 500 is directly connected to the main frame 200, the sensing frame 500 includes the deformation beam 520, and at least one cantilever includes the second cantilever 530. The second cantilever 530 is connected to the end of the deformation beam 520 close to the tip 300. The main shaft assembly 400 abuts against the second cantilever 530. When the tip 300 moves relative to the barrel 100 along the preset direction, the main shaft assembly 400 drives the second cantilever 530 to move. In this embodiment, the sensing frame 500 is configured in an L-shaped structure. The strain gauge 700 includes an electrical connection member and at least one resistor. The electrical connection member includes a strain segment 711 and a connection segment 712 connected to the strain segment 711. The strain segment 711 is attached to one side of the deformation beam 520, and the connection segment 712 is electrically connected to the main board 600 of the control assembly. It can be understood that, in this embodiment, at least one resistor may be disposed on the strain segment 711. When the tip 300 moves relative to the barrel 100 along the preset direction, the main shaft assembly 400 is configured to drive at least one cantilever to move to cause the deformation beam 520 and at least one resistor to undergo elastic deformation, consequently, the elastic deformation is detected. That is, the strain gauge 700 obtains the deformation amount based on the elastic deformation of at least one resistor and sends the corresponding electrical signal to the main board 600 of the control assembly.

The electrical connection member is a flexible printed circuit (FPC) 710. The strain segment 711 and the connection segment 712 are configured as the integrally-formed FPC structure. At least one resistor is a printed resistor formed on the FPC 710 of the strain segment 711, or a flat resistance wire disposed on the FPC 710 of the strain segment 711.

Further, in this embodiment, at least one resistor may include two first bridge arm resistors 720. Two first bridge arm resistors 720 are arranged spaced apart on the strain segment 711 along a first direction MM' to form a half-bridge structure on the electrical connection member. When the tip 300 moves relative to the barrel 100 along the preset direction, the main shaft assembly 400 drives at least one cantilever (e.g., the second cantilever 530) to move to cause the deformation beam 520 and two first bridge arm resistors 720 to undergo elastic deformation.

It should be noted that the main shaft assembly 400 is connected to the second cantilever 530 by abutting connection. This arrangement minimizes interference with the movement of the second cantilever 530 when the main shaft assembly 400 acts on the second cantilever 530, thereby ensuring that the main shaft assembly 400 can push the deformation beam 520 to undergo elastic deformation in a preferable manner via the second cantilever 530. That is, the force transmitted by the main shaft assembly 400 can be well fed back to the elastic deformation of the deformation beam 520, thereby driving the strain gauge 700 to deform, and further accurately obtaining the corresponding electrical signal to send to the main board 600 of the control assembly, thereby enabling the effective implementation of the present disclosure.

Specifically, two first bridge arm resistors 720 are capable of deforming when the deformation beam 520 deforms. The first bridge arm resistors 720 may be printed resistors disposed on the FPC 710, or may be flat resistance wires disposed on the FPC 710, depending on actual needs.

The deformation beam 520 is configured as a sheet-shaped structure. Two first bridge arm resistors 720 are each configured as the rectangular sheet-shaped structure extending along a second direction NN'. The short sides of two first bridge arm resistors 720 are electrically connected to the strain segment 711. The second direction NN' is perpendicular to the first direction MM', and the second direction NN' is the same as the preset direction.

During elastic deformation of the deformation beam 520, because two first bridge arm resistors 720 are each configured as the rectangular sheet-shaped structure, two first bridge arm resistors 720 also undergo corresponding deformation along with the deformation beam 520, thereby converting the elastic deformation of the deformation beam 520 into the electrical signal. Furthermore, because two first bridge arm resistors 720 form the half-bridge structure on the FPC 710, the FPC 710 and two first bridge arm resistors 720 form a half-bridge pressure sensor. The half-bridge pressure sensor generates a corresponding pressure signal based on the electrical signals of two first bridge arm resistors 720 and transmits the pressure signal to the main board 600 of the control assembly. The main board 600 of the control assembly calculates the pressure applied to the tip 300 (i.e., the force of the tip 300 against the screen) based on the received pressure signal.

Of course, referring to Figs. 3 to 5, when the deformation beam 520 is indirectly connected to the main frame 200, at least one cantilever may further include a first cantilever 510. The first cantilever 510 is connected to the rear end of the deformation beam 520 (i.e., the end of the deformation beam 520 away from the tip 300). The first cantilever 510 and the second cantilever 530 are located on the same side of the deformation beam 520. In this configuration, the sensing frame 500 is configured in a U-shaped structure. The deformation beam 520 is connected to the main frame 200 via the first cantilever 510. The main frame 200 includes a frame body. The tip 300, the main shaft assembly 400, the sensing frame 500, and the main board 600 of the control assembly are sequentially disposed on the frame body along the preset direction. The first boss 211 and the second boss 212 are arranged spaced apart on the frame body. The positioning gap for receiving the first cantilever 510 is formed between the first boss 211 and the second boss 212. During assembly of the stylus, the tip 300, the main shaft assembly 400, the sensing frame 500, the strain gauge 700, and the main board 600 of the control assembly may be pre-installed on the main frame 200, and then the main frame 200 is installed into the barrel 100. This configuration facilitates the assembly of the stylus.

The sensing frame 500 is configured as a U-shaped sheet-like structure. It can be understood that the sensing frame 500 adopts this structural form for the following reasons. Firstly, the overall structure of the sensing frame 500 is simple. Accordingly, when the sensing frame 500 is installed in the barrel 100, it saves space inside the barrel 100, allowing the barrel 100 to have a smaller cross-sectional dimension, and the installation of the sensing frame 500 is relatively convenient. Secondly, as a key component of the stylus, the structure of the sensing frame 500 has been simplified, thereby effectively reducing the manufacturing cost of the stylus.

The strain segment 711 is attached to the side of the deformation beam 520 opposite to the first cantilever 510 and the second cantilever 530. Alternatively, the strain segment 711 may be attached to the same side of the deformation beam 520 as the first cantilever 510 and the second cantilever 530, and the strain segment 711 is located between the first cantilever 510 and the second cantilever 530. It is worth noting that, as a key component of the stylus, the strain gauge 700 in the present disclosure is disposed only on one side of the deformation beam 520, whereas conventional strain gauges are typically disposed on two sides of the deformation beam. This configuration simplifies the structural complexity of the strain gauge 700, thereby effectively simplifying the installation structure of the strain gauge 700 and reducing the manufacturing process complexity of the stylus.

One of the side wall of the second cantilever 530 and the end portion of the main shaft assembly 400 is provided with an arc-shaped protrusion 531, and the arc-shaped protrusion 531 abuts against the other of the side wall of the second cantilever 530 and the end portion of the main shaft assembly 400. For example, the arc-shaped protrusion 531 may be provided on the front side surface of the second cantilever 530, and the end portion of the main shaft assembly 400 abuts against the second cantilever 530 via the arc-shaped protrusion 531. Alternatively, the arc-shaped protrusion 531 may be provided on the rear end of the main shaft assembly 400, and the end portion of the main shaft assembly 400 abuts against the second cantilever 530 via the arc-shaped protrusion 531. It can be understood that the second cantilever 530 abuts against the main shaft assembly 400 via the arc-shaped protrusion 531. This arrangement minimizes interference with the movement of the second cantilever 530 when the main shaft assembly 400 acts on the second cantilever 530, thereby ensuring that the force transmitted by the main shaft assembly 400 can be well fed back to the elastic deformation of the deformation beam 520, and further accurately obtaining a corresponding electrical signal for input to the main board 600 of the control assembly.

To further facilitate the installation of the stylus, referring to Figs. 3 to 5, the frame body includes a first bracket 210 and a second bracket 220 that are snap-fitted to each other. The tip 300, the main shaft assembly 400, the sensing frame 500, the strain gauge 700, and the main board 600 of the control assembly are sequentially disposed on the side of the first bracket 210 adjacent to the second bracket 220. The second bracket 220 is snap-fitted to the first bracket 210. The second bracket 220 is configured to retain the tip 300, the main shaft assembly 400, the sensing frame 500, the strain gauge 700, and the main board 600 of the control assembly on the first bracket 210. Thus, the installation of the tip 300, the main shaft assembly 400, the sensing frame 500, the strain gauge 700, and the main board 600 of the control assembly is relatively convenient.

The first boss 211 and the second boss 212 are disposed on the side of the first bracket 210 adjacent to the second bracket 220. The first boss 211 is spaced apart in front of the second boss 212 (i.e., the first boss 211 is closer to the tip 300 than the second boss 212), so as to form the positioning gap therebetween. When the sensing frame 500 is installed on the first bracket 210, the first cantilever 510 is fixedly snapped into the positioning gap between the first boss 211 and the second boss 212, thereby allowing the sensing frame 500 to be conveniently installed on the first bracket 210.

### Embodiment 2

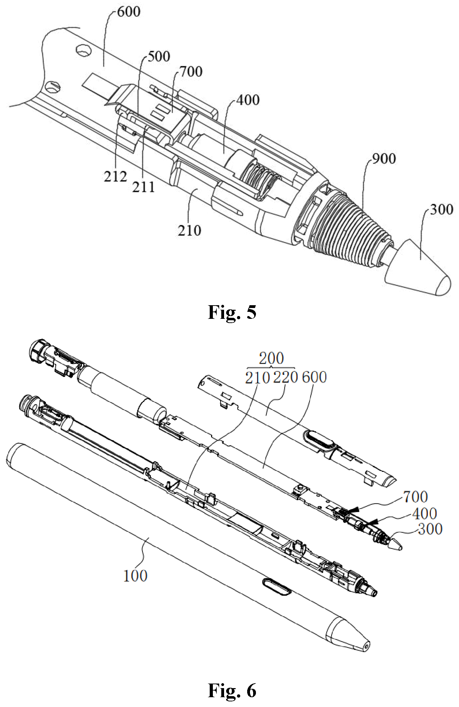

Referring to Figs. 6 to 8, when the sensing frame 500 is directly connected to the main frame 200, the sensing frame 500 includes the deformation beam 520, and at least one cantilever includes the second cantilever 530. The second cantilever 530 is connected to the end of the deformation beam 520 close to the tip 300. The main shaft assembly 400 abuts against the second cantilever 530. When the tip 300 moves relative to the barrel 100 along the preset direction, the main shaft assembly 400 drives the second cantilever 530 to move. In this configuration, the sensing frame 500 is configured in the L-shaped structure. The strain gauge 700 includes the electrical connection member and at least one resistor. At least one resistor includes four bridge arm resistors. The electrical connection member includes the strain segment 711 and the connection segment 712 connected to the strain segment 711. The strain segment 711 is attached to one side of the deformation beam 520, and the connection segment 712 is electrically connected to the main board 600 of the control assembly. The four bridge arm resistors are all disposed on the strain segment 711 to form an electrical bridge structure on the electrical connection member. The four bridge arm resistors are each configured as the sheet-shaped structure so as to be capable of deforming when the deformation beam 520 deforms. It can be understood that, in this embodiment, the four bridge arm resistors are disposed on the strain segment 711. When the tip 300 moves relative to the barrel 100 along the preset direction, the main shaft assembly 400 drives at least one cantilever to move, causing the deformation beam 520 and the four bridge arm resistors to undergo elastic deformation, whereby the elastic deformation is detected. That is, the strain gauge 700 obtains the deformation amount based on the elastic deformation of the four bridge arm resistors and sends the corresponding electrical signal to the main board 600 of the control assembly.

The electrical connection member is the FPC 710. The strain segment 711 and the connection segment 712 are configured as the integrally-formed FPC structure. At least one resistor is the printed resistor formed on the FPC 710 of the strain segment 711, or the flat resistance wire disposed on the FPC 710 of the strain segment 711.

It should be noted that the main shaft assembly 400 abuts against the second cantilever 530. This arrangement minimizes interference with the movement of the second cantilever 530 when the main shaft assembly 400 acts on the second cantilever 530, thereby ensuring that the main shaft assembly 400 can push the deformation beam 520 to undergo elastic deformation in a preferable manner via the second cantilever 530. That is, the force transmitted by the main shaft assembly 400 can be well fed back to the elastic deformation of the deformation beam 520, thereby driving the strain gauge 700 to deform, and further accurately obtaining the corresponding electrical signal to be sent to the main board 600, thereby enabling the effective implementation of the present disclosure.

During elastic deformation of the deformation beam 520, because the four bridge arm resistors are each configured as the rectangular sheet-shaped structure, the four bridge arm resistors also undergo corresponding deformation along with the deformation beam 520, thereby converting the elastic deformation of the deformation beam 520 into the electrical signal. Furthermore, because the four bridge arm resistors form the electrical bridge structure on the FPC 710, the FPC 710 and the four bridge arm resistors form a bridge pressure sensor. The bridge pressure sensor generates the corresponding pressure signal based on the electrical signals of four bridge arm resistors and transmits the pressure signal to the main board 600. The main board 600 calculates the pressure applied to the tip 300 (i.e., the force of the tip 300 against the screen) based on the received pressure signal.

At least one resistor (i.e., the four bridge arm resistors) includes two first bridge arm resistors 720 and two second bridge arm resistors 730. Two first bridge arm resistors 720 are arranged spaced apart on the strain segment 711 along the first direction MM'. Two second bridge arm resistors 730 are arranged spaced apart on the strain segment 711 along the second direction NN'. Two first bridge arm resistors 720 and two second bridge arm resistors 730 form the electrical bridge structure on the electrical connection member. When the tip 300 moves relative to the barrel 100 along the preset direction, the main shaft assembly 400 drives at least one cantilever (e.g., the second cantilever 530) to move, causing the deformation beam 520, two first bridge arm resistors 720, and two second bridge arm resistors 730 to undergo elastic deformation. The first direction MM' intersects the second direction NN'.

Specifically, two first bridge arm resistors 720 are capable of deforming when the deformation beam 520 deforms, and two second bridge arm resistors 730 are capable of deforming when the deformation beam 520 deforms. The first bridge arm resistors 720 or the second bridge arm resistors 730 may be printed resistors disposed on the FPC 710, or may be flat resistance wires disposed on the FPC 710, depending on actual needs.

Two first bridge arm resistors 720 are each configured as the rectangular sheet-shaped structure. Short sides of two first bridge arm resistors 720 are electrically connected to the strain segment 711. Two second bridge arm resistors 730 are each configured as the rectangular sheet-shaped structure, and short sides of two second bridge arm resistors 730 are electrically connected to the strain segment 711. The first direction MM' is perpendicular to the second direction NN'.

Of course, referring to Figs. 6 to 8, when the deformation beam 520 is indirectly connected to the main frame 200, at least one cantilever may further include the first cantilever 510. The first cantilever 510 is connected to the rear end of the deformation beam 520 (i.e., the end of the deformation beam 520 away from the tip 300). The first cantilever 510 and the second cantilever 530 are located on the same side of the deformation beam 520. In this configuration, the sensing frame 500 is configured in a U-shaped structure, and the deformation beam 520 is connected to the main frame 200 via the first cantilever 510. The main frame 200 includes the frame body, the first boss 211, and the second boss 212. The tip 300, the main shaft assembly 400, the sensing frame 500, and the main board 600 of the control assembly are sequentially disposed on the frame body along the preset direction. The first boss 211 and the second boss 212 are spaced apart on the frame body. The positioning gap for receiving the first cantilever 510 is formed between the first boss 211 and the second boss 212. During assembly of the stylus, the tip 300, the main shaft assembly 400, the sensing frame 500, the strain gauge 700, and the main board 600 of the control assembly may be pre-installed on the main frame 200, and then the main frame 200 is installed into the barrel 100. This configuration facilitates the assembly of the stylus.

The sensing frame 500 is configured as a U-shaped sheet-like structure. It can be understood that the sensing frame 500 adopts such a structural form for the following reasons. Firstly, the overall structure of the sensing frame 500 is simple. Accordingly, when the sensing frame 500 is applied in the barrel 100, it saves space inside the barrel 100, allowing the barrel 100 to have a smaller cross-sectional dimension, and the installation of the sensing frame 500 is relatively convenient. Secondly, as a key component of the stylus, the structure of the sensing frame 500 has been simplified, thereby effectively reducing the manufacturing cost of the stylus.

One of the side wall of the second cantilever 530 and the end portion of the main shaft assembly 400 is provided with the arc-shaped protrusion 531, and the arc-shaped protrusion 531 abuts against the other of the side wall of the second cantilever 530 and the end portion of the main shaft assembly 400. For example, the arc-shaped protrusion 531 may be provided on the front side surface of the second cantilever 530, and the end portion of the main shaft assembly 400 abuts against the second cantilever 530 via the arc-shaped protrusion 531. Alternatively, the arc-shaped protrusion 531 may be provided on the rear end of the main shaft assembly 400, and the end portion of the main shaft assembly 400 abuts against the second cantilever 530 via the arc-shaped protrusion 531. It can be understood that the second cantilever 530 abuts against the main shaft assembly 400 via the arc-shaped protrusion 531. This arrangement minimizes interference with the movement of the second cantilever 530 when the main shaft assembly 400 acts on the second cantilever 530, thereby ensuring that the force transmitted by the main shaft assembly 400 can be well fed back to the elastic deformation of the deformation beam 520, and further accurately obtaining the corresponding electrical signal for input to the main board 600 of the control assembly.

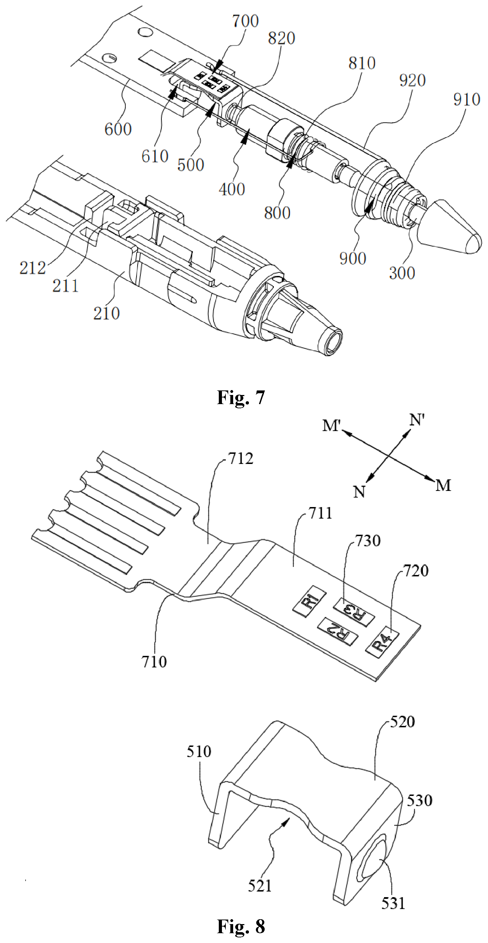

To further facilitate the installation of the stylus, referring to Figs. 6 and 7, the frame body includes the first bracket 210 and the second bracket 220 that are snap-fitted to each other. The tip 300, the main shaft assembly 400, the sensing frame 500, the strain gauge 700, and the main board 600 of the control assembly are sequentially disposed on the side of the first bracket 210 adjacent to the second bracket 220. The second bracket 220 is snap-fitted to the first bracket 210. The second bracket 220 is configured to retain the tip 300, the main shaft assembly 400, the sensing frame 500, the strain gauge 700, and the main board 600 of the control assembly on the first bracket 210. Thus, the installation of the tip 300, the main shaft assembly 400, the sensing frame 500, the strain gauge 700, and the main board 600 of the control assembly is relatively convenient.

The first boss 211 and the second boss 212 are disposed on the side of the first bracket 210 adjacent to the second bracket 220. The first boss 211 is spaced apart in front of the second boss 212 (i.e., the first boss 211 is closer to the tip 300 than the second boss 212), so as to form the positioning gap therebetween. When the sensing frame 500 is installed on the first bracket 210, the first cantilever 510 is fixedly snapped into the positioning gap between the first boss 211 and the second boss 212. Thus, the sensing frame 500 is conveniently mounted on the first bracket 210.

More specifically, referring to Fig. 8, the first bridge arm resistors 720 are each configured as the rectangular sheet-shaped structure extending along the second direction NN', and the second bridge arm resistors 730 are each configured as the rectangular sheet-shaped structure extending along the first direction MM'. The first direction MM' is the same as the preset direction. In this configuration, the long sides of two first bridge arm resistors 720 are perpendicular to the side of the deformation beam 520, and the long sides of two second bridge arm resistors 730 are parallel to the side of the deformation beam 520. When the deformation beam 520 undergoes deformation, the first bridge arm resistors 720 deform in their width direction, and the lengths of the first bridge arm resistors 720 are reduced. Accordingly, the resistances of the first bridge arm resistors 720 are reduced. Thus, the first bridge arm resistors 720 generate negative strain. At the same time, the second bridge arm resistors 730 deform in their length direction, and the lengths of the second bridge arm resistors 730 are increased. Accordingly, the resistances of the second bridge arm resistors 730 are increased. Thus, the second bridge arm resistors 730 generate positive strain. The main board 600 of the control assembly receives electrical signals corresponding to the negative strain of the first bridge arm resistors 720 and the positive strain of the second bridge arm resistors 730, thereby accurately calculating the bending condition of the deformation beam 520 and thus determining the force applied to the tip 300.

Furthermore, one first bridge arm resistor 720 is located at the position of the deformation beam 520 close to the first cantilever 510, and the other first bridge arm resistor 720 is located at the position of the deformation beam 520 close to the second cantilever 530. Two first bridge arm resistors 720 are symmetrically disposed about a bisecting plane. Here, the bisecting plane refers to a plane equidistant between the first cantilever 510 and the second cantilever 530, and the bisecting plane also exactly bisects the deformation beam 520. Two second bridge arm resistors 730 are located exactly within the space between the two first bridge arm resistors 720. The center of the long side of each second bridge arm resistor 730 corresponds exactly to the center of the side of the deformation beam 520. The spacing between each first bridge arm resistor 720 and second bridge arm resistor 730 is set to be the same; that is, the midpoint of the long side of the second bridge arm resistor 730 is exactly located on the bisecting plane.

It can be understood that during the deformation process of the deformation beam 520, the two first bridge arm resistors 720 are symmetrically located on both sides of the bisecting plane, and the degrees of deformation of the two first bridge arm resistors 720 are substantially the same, thereby generating the same negative strain. Simultaneously, the two second bridge arm resistors 730 are located at the center position of the deformation beam 520, so the degrees of deformation of the two second bridge arm resistors 730 are substantially the same, thereby generating the same positive strain. The main board 600 of the control assembly simultaneously receives the same negative strain and the same positive strain. Thus, the main board 600 of the control assembly can conveniently calculate the bending condition of the deformation beam 520 based on the electrical signals detected by the first bridge arm resistors 720 and the second bridge arm resistors 730, thereby determining the force applied to the tip 300.

In addition, with the above structural arrangement of the first bridge arm resistors 720 and the second bridge arm resistors 730, the two second bridge arm resistors 730 are located within the gap between the two first bridge arm resistors 720, thereby allowing the two first bridge arm resistors 720 and the two second bridge arm resistors 730 to be compactly arranged on the strain segment 711. The deformation beam 520 need not be made larger in the length direction or the width direction to accommodate the installation of the first bridge arm resistors 720 and the second bridge arm resistors 730, thereby effectively reducing the size of the sensing frame 500.

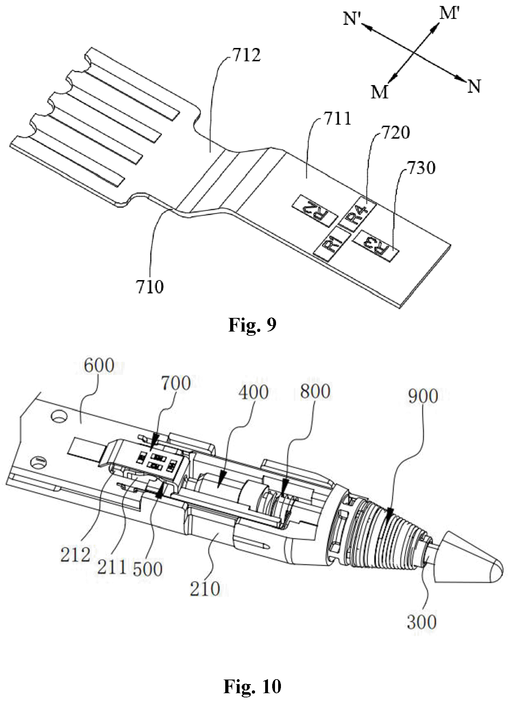

More specifically, referring to Fig. 9, the first bridge arm resistors 720 are each configured as the rectangular sheet-shaped structure extending along the first direction MM', and the second bridge arm resistors 730 are each configured as the rectangular sheet-shaped structure extending along the second direction NN'. The second direction NN' is the same as the preset direction. In this configuration, the long sides of the two first bridge arm resistors 720 are perpendicular to the side of the deformation beam 520, and the long sides of the two second bridge arm resistors 730 are parallel to the side of the deformation beam 520. When the deformation beam 520 undergoes deformation, the first bridge arm resistors 720 deform in their width direction, causing the lengths of the first bridge arm resistors 720 to decrease. Accordingly, the resistances of the first bridge arm resistors 720 are reduced, resulting in negative strain in the first bridge arm resistors 720. Simultaneously, the second bridge arm resistors 730 deform in their length direction, and the lengths of the second bridge arm resistors 730 increase. Accordingly, the resistances of the second bridge arm resistors 730 are increased, resulting in positive strain in the second bridge arm resistors 730. The main board 600 of the control assembly receives electrical signals corresponding to the negative strain of the first bridge arm resistors 720 and the positive strain of the second bridge arm resistors 730, thereby accurately calculating the bending condition of the deformation beam 520 and determining the force applied to the tip 300.

Further, one second bridge arm resistor 730 is disposed at the position of the deformation beam 520 close to the first cantilever 510, and the other second bridge arm resistor 730 is disposed at the position of the deformation beam 520 close to the second cantilever 530. The two second bridge arm resistors 730 are symmetrically disposed about the bisecting plane. Specifically, the bisecting plane refers to a plane equidistant between the first cantilever 510 and the second cantilever 530, and the bisecting plane also exactly bisects the deformation beam 520. The two first bridge arm resistors 720 are located between the two second bridge arm resistors 730. The center of the short side of each first bridge arm resistor 720 corresponds exactly to the center of the side of the deformation beam 520. The distance between each first bridge arm resistor 720 and each second bridge arm resistor 730 is set to be the same; that is, the midpoint of the short side of each first bridge arm resistor 720 is exactly located on the bisecting plane. Therefore, during deformation of the deformation beam 520, the two first bridge arm resistors 720 deform to essentially the same extent, generating the same negative strain; simultaneously, the two second bridge arm resistors 730 deform to essentially the same extent, generating the same positive strain. Thus, the main board 600 of the control assembly receives both the same negative strain and the same positive strain simultaneously.

Referring to Fig. 8, the center position of the long side of the second bridge arm resistor 730 corresponds to the center position of the side of the deformation beam 520. Referring to Fig. 9, the center position of the short side of the first bridge arm resistor 720 corresponds to the center position of the side of the deformation beam 520. Referring to Figs. 8 and 9, arc-shaped concave portions 521 are provided at the center positions of both sides of the deformation beam 520. The lowest point of the concave portion 521 corresponds to the center position of the side of the deformation beam 520. It can be understood that by providing the concave portions 521 at the center positions of the sides of the deformation beam 520, the concave portions 521 increase the sensitivity of the deformation beam 520 at the center positions. Therefore, when the deformation beam 520 is acted upon by the main shaft assembly 400, it can sensitively deform at its center position, thereby driving the bridge arm resistors to deform significantly, generating a sufficiently large electrical signal to be transmitted to the main board 600 of the control assembly, so as to accurately calculate the pressure value.

Referring to Figs. 7, 8, and 10, the first cantilever 510 and the second cantilever 530 are disposed on the same side of the sensing frame 500. More specifically, the first cantilever 510 and the second cantilever 530 are located on the side of the sensing frame 500 away from the second bracket 220, and the strain segment 711 of the strain gauge 700 is attached to the other side of the sensing frame 500. It can be understood that the first cantilever 510 and the second cantilever 530 are disposed on the same side of the sensing frame 500, and the strain gauge 700 is disposed on the other side of the sensing frame 500, this arrangement effectively avoids interference among the strain gauge 700 and the first cantilever 510 and the second cantilever 530, thereby facilitating the mounting of the strain gauge 700 on the sensing frame 500 for connection to the main board 600 of the control assembly. Moreover, with this structural configuration of the sensing frame 500, the projections of the first cantilever 510 and the second cantilever 530 overlap in the axial direction, so the sensing frame 500 occupies a small area within the cross-section of the stylus, allowing the stylus to be manufactured in a smaller size. Of course, the first cantilever 510, the second cantilever 530, and the strain segment 711 may also be disposed on the same side of the deformation beam 520, i.e., the strain segment 711 is located between the first cantilever 510 and the second cantilever 530.

### Embodiment 3

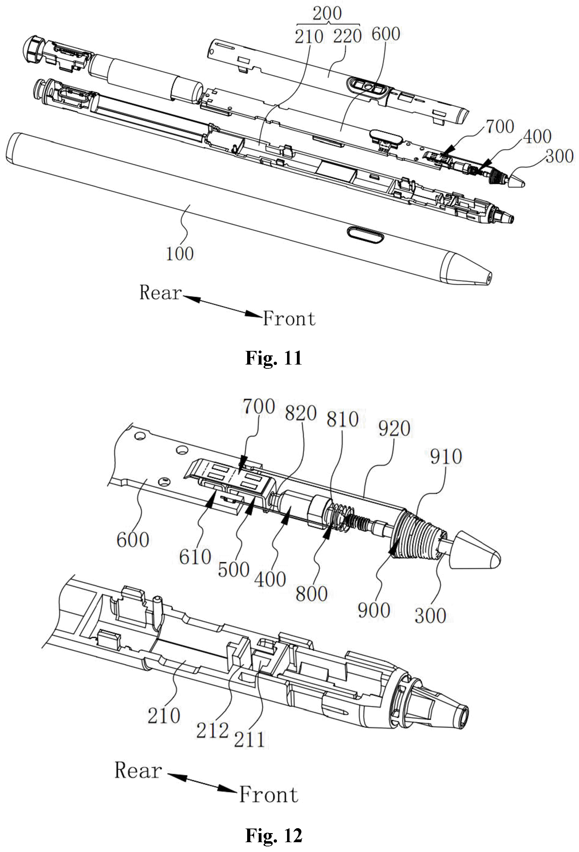

Referring to Figs. 11 to 13, when the sensing frame 500 is directly connected to the main frame 200, the sensing frame 500 includes the deformation beam 520, and at least one cantilever includes the second cantilever 530. The second cantilever 530 is connected to the end of the deformation beam 520 close to the tip 300. The main shaft assembly 400 abuts against the second cantilever 530. When the tip 300 moves relative to the barrel 100 along the preset direction, the main shaft assembly 400 drives the second cantilever 530 to move. In this configuration, the sensing frame 500 is configured in the L-shaped structure. The strain gauge 700 includes the electrical connection member and at least one resistor. At least one resistor includes two first bridge arm resistors 720 and two second bridge arm resistors 730. The electrical connection member includes the strain segment 711, the static segment 713, and the connection segment 712 connected in sequence. The strain segment 711 is attached to one side of the deformation beam 520. The static segment 713 is disposed spaced apart from the deformation beam 520. The connection segment 712 is electrically connected to the main board 600 of the control assembly. Two first bridge arm resistors 720 are arranged spaced apart on the strain segment 711 along the first direction MM'. Two second bridge arm resistors 730 are arranged spaced apart on the static segment 713 along the first direction MM'. The two first bridge arm resistors 720 and the two second bridge arm resistors 730 form an electrical bridge structure on the electrical connection member. The two first bridge arm resistors 720 are capable of undergoing elastic deformation when the deformation beam 520 deforms, while the two second bridge arm resistors 730 are configured to be free from elastic deformation when the deformation beam 520 deforms. The main shaft assembly 400 drives the second cantilever 530 to move, causing the deformation beam 520 and the two first bridge arm resistors 720 to undergo elastic deformation. It can be understood that, in this embodiment, the two first bridge arm resistors 720 are disposed on the strain segment 711, and the two second bridge arm resistors 730 are disposed on the static segment 713. When the tip 300 moves relative to the barrel 100 along the preset direction, the main shaft assembly 400 drives at least one cantilever to move to cause the deformation beam 520 and the two first bridge arm resistors 720 to undergo elastic deformation, thereby allowing that the elastic deformation is detected. That is, the strain gauge 700 obtains the deformation amount based on the elastic deformation of the two first bridge arm resistors 720 and sends the corresponding electrical signal to the main board 600 of the control assembly.

The electrical connection member is the FPC 710, and the strain segment 711 and the connection segment 712 are configured as the integrally-formed FPC structure. At least one resistor is the printed resistor formed on the FPC 710 of the strain segment 711, or the flat resistance wire disposed on the FPC 710 of the strain segment 711.

Specifically, the first bridge arm resistors 720 or the second bridge arm resistors 730 may be printed resistors disposed on the FPC 710, or may be flat resistance wires disposed on the FPC 710, depending on actual needs.

It should be noted that the main shaft assembly 400 abuts against the second cantilever 530. This arrangement minimizes interference with the movement of the second cantilever 530 when the main shaft assembly 400 acts on the second cantilever 530, thereby ensuring that the main shaft assembly 400 can push the deformation beam 520 to undergo elastic deformation in a preferable manner via the second cantilever 530. That is, the force transmitted by the main shaft assembly 400 can be well fed back to the elastic deformation of the deformation beam 520, thereby driving the strain gauge 700 to deform, and further accurately obtaining the corresponding electrical signal to be sent to the main board 600 of the control assembly. Thus, the solution of the present disclosure is well implemented.

During deformation of the deformation beam 520, the two first bridge arm resistors 720 also undergo corresponding deformation along with the deformation beam 520, thereby converting the elastic deformation of the deformation beam 520 into the electrical signal. Furthermore, the static segment 713 is disposed spaced apart from the deformation beam 520, and the two second bridge arm resistors 730 remain unchanged. Because the two first bridge arm resistors 720 and the two second bridge arm resistors 730 form the electrical bridge structure, the FPC 710, the two first bridge arm resistors 720, and the two second bridge arm resistors 730 form the bridge pressure sensor. The bridge pressure sensor generates the corresponding pressure signal based on the electrical signals of the two first bridge arm resistors 720 and the two second bridge arm resistors 730, and transmits the pressure signal to the main board 600 of the control assembly. The main board 600 of the control assembly calculates the pressure applied to the tip 300 (i.e., the force of the tip 300 against the screen) based on the received pressure signal.

With the arrangement of the strain segment 711 and the static segment 713 of the FPC 710, the two first bridge arm resistors 720 are disposed on the strain segment 711, and the two second bridge arm resistors 730 are disposed on the static segment 713. With this arrangement, when the strain gauge 700 is applied to the sensing frame 500, only positive strain or negative strain of the strain gauge 700 needs to be considered. Consequently, the sensing frame 500 does not require a complex structure to accommodate the strain gauge 700, e.g., it need not be configured as a parallelogram linkage structure, thereby simplifying the structure of the sensing frame 500. Thus, the space occupied by the sensing frame 500 in the cross-section of the stylus is effectively reduced. The cross-section of the barrel 100 need not be designed to be large to meet the installation requirements of the sensing frame 500, and the stylus can be manufactured in a smaller size. During use, it is not necessary to reserve a large receiving slot in the housing of the electronic device to accommodate the stylus, thereby ensuring the aesthetic appearance of the electronic device.

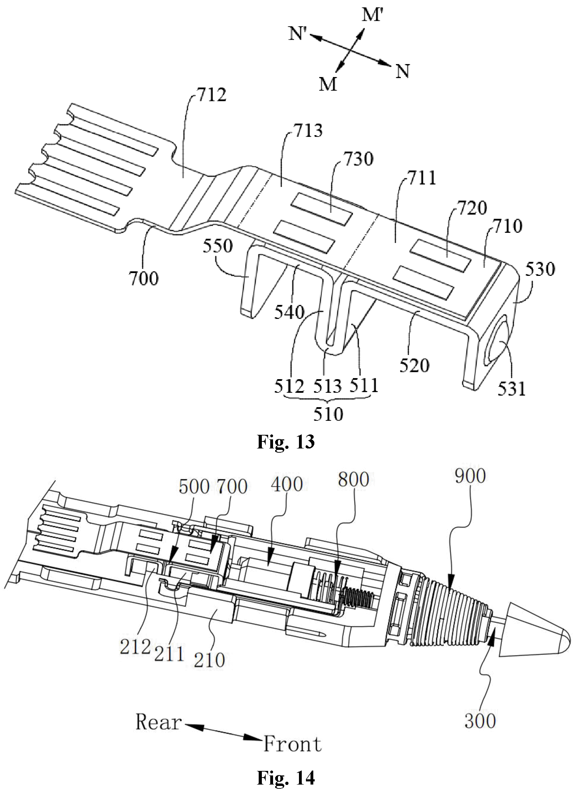

Of course, referring to Figs. 13 and 14, when the deformation beam 520 is indirectly connected to the main frame 200, at least one cantilever may further include the first cantilever 510. The first cantilever 510 is connected to the end of the deformation beam 520 away from the tip 300. The sensing frame 500 may further include the static beam 540. The static beam 540 and the deformation beam 520 extend along the preset direction and are disposed on the side of the main frame 200. The first cantilever 510 is connected to the front end of the static beam 540 (i.e., the end of the static beam 540 close to the tip 300) and is connected to the main frame 200. The first cantilever 510 and the second cantilever 530 are located on the same side of the deformation beam 520 and the static beam 540. The static segment 713 is attached to the static beam 540. In this configuration, the sensing frame 500 is configured in the F-shaped structure. The deformation beam 520 is connected to the main frame 200 via the first cantilever 510.

During the pressure detection process, the front end of the tip 300 acts as the writing end on the screen. The tip 300 receives the corresponding reaction force from the screen, and the tip 300 transmits this reaction force to the second cantilever 530 via the main shaft assembly 400. Because the first cantilever 510 and the main frame 200 are in a relatively fixed state, when the second cantilever 530 receives the force transmitted from the tip 300, the deformation beam 520 undergoes elastic deformation at a center position thereof in its length direction. During the deformation of the deformation beam 520, the two first bridge arm resistors 720 also undergo corresponding deformation along with the deformation beam 520, thereby converting the elastic deformation of the deformation beam 520 into the electrical signal. The static segment 713 is attached to the static beam 540 so as to be disposed spaced apart from the deformation beam 520, and the two second bridge arm resistors 730 remain unchanged.

As can be seen from the above, the sensing frame 500 is composed of the first cantilever 510, the deformation beam 520, the second cantilever 530, and the static beam 540. The strain segment 711 is attached to the deformation beam 520, the static segment 713 is attached to the static beam 540, and the main shaft assembly 400 abuts against the second cantilever 530. With this configuration, the overall structure of the sensing frame 500 is simple, and the difficulty of assembling the sensing frame 500 in the stylus is effectively reduced, thereby effectively reducing the manufacturing difficulty of the stylus. Simultaneously, as a key component of the stylus, the structure of the sensing frame 500 is simplified, thereby effectively reducing the cost of the stylus.

In addition, the sensing frame 500 is composed of the first cantilever 510, the deformation beam 520, the static beam 540, and the second cantilever 530. The space occupied by the sensing frame 500 in the cross-section of the stylus is also effectively reduced. Consequently, the cross-section of the barrel 100 need not be designed to be large to meet the installation requirements of the sensing frame 500, and the stylus can be made with a smaller size. During use, the housing of the electronic device need not be provided with a large receiving slot to accommodate the stylus, ensuring the appearance of the electronic device.

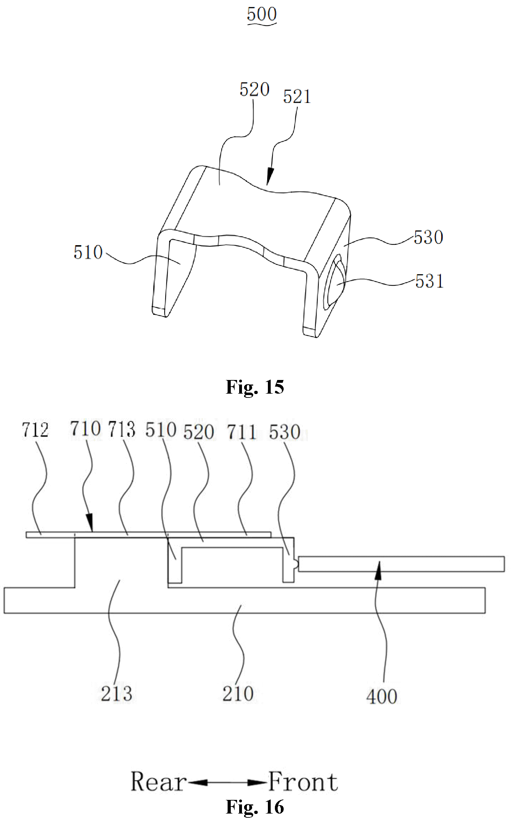

It should be noted that when the sensing frame 500 includes the deformation beam 520, and at least one cantilever includes the second cantilever 530 (i.e., the sensing frame 500 is configured in the L-shaped structure), or when the sensing frame 500 includes the deformation beam 520, and at least one cantilever includes the second cantilever 530 and the first cantilever 510 (i.e., the sensing frame 500 is configured in the U-shaped structure, see Fig. 15), the static segment 713 may be attached to the main frame 200, or may be attached to the main board 600 of the control assembly, depending on specific requirements. Referring to Fig. 16, for example, the main frame 200 is provided with a mounting protrusion 213. The mounting protrusion 213 is located between the sensing frame 500 and the main board 600 of the control assembly. The first cantilever 510 is fixedly connected to the side of the mounting protrusion 213 away from the main board 600 of the control assembly. The mounting protrusion 213 has a mounting surface, and the mounting surface is substantially the same as the back surface of the deformation beam 520. The strain segment 711 is attached to the back side of the deformation beam 520, and the static segment 713 is attached to the mounting surface of the mounting protrusion 213. It can be understood that by providing the mounting protrusion 213, the mounting protrusion 213 can serve as a mounting carrier, thereby facilitating the installation of the sensing frame 500. At the same time, the mounting surface of the mounting protrusion 213 also facilitates the attachment of the static segment 713 for connection to the main board 600 of the control assembly.

More specifically, referring to Fig. 14, the first bridge arm resistors 720 are each configured as the rectangular sheet-shaped structure extending along the second direction NN'. The short sides of two first bridge arm resistors 720 are electrically connected to the strain segment 711. The second bridge arm resistors 730 are each configured as the rectangular sheet-shaped structure extending along the second direction NN'. The short sides of two second bridge arm resistors 730 are electrically connected to the static segment 713. The second direction NN' is perpendicular to the first direction MM', and the second direction NN' is the same as the preset direction. In this configuration, the long sides of the two first bridge arm resistors 720 are parallel to the side of the deformation beam 520. It should be noted that the side of the deformation beam 520 can be understood as the line connecting the first cantilever 510 and the second cantilever 530. The center position of the long side of the first bridge arm resistor 720 corresponds to the center position of the side of the deformation beam 520. Therefore, when the deformation beam 520 bends, the deformation beam 520 deforms in the length direction, causing the first bridge arm resistors 720 to deform and convert the deformation into the electrical signal to be transmitted to the main board 600 of the control assembly. If the short sides of the two first bridge arm resistors 720 are parallel to the side of the deformation beam 520, the center position of the short side of the first bridge arm resistor 720 corresponds to the center position of the side of the deformation beam 520. When the deformation beam 520 bends, the deformation beam 520 deforms in the width direction, causing the first bridge arm resistors 720 to deform and convert the deformation into the electrical signal to be transmitted to the main board 600 of the control assembly. Further, the center position of the long side of the first bridge arm resistor 720 corresponds to the center position of the side of the deformation beam 520. As shown in Fig. 15, arc-shaped concave portions 521 are provided at the center positions of both sides of the deformation beam 520. The lowest point of the concave portion 521 corresponds to the center position of the side of the deformation beam 520. It can be understood that by providing the concave portions 521 at the center positions of the sides of the deformation beam 520, the concave portions 521 increase the sensitivity of the deformation beam 520 at the center positions. Therefore, when the deformation beam 520 is acted upon by the main shaft assembly 400, it can sensitively deform at its center position, thereby driving the first bridge arm resistors 720 to deform significantly, generating a sufficiently large electrical signal to be transmitted to the main board 600 of the control assembly, so as to accurately calculate the pressure value.

Referring to Figs. 12 to 14, the main frame 200 includes the frame body, the first boss 211, and the second boss 212. The tip 300, the main shaft assembly 400, the sensing frame 500, and the main board 600 of the control assembly are sequentially disposed on the frame body along the axial direction. The first boss 211 and the second boss 212 are arranged spaced apart on the frame body. The positioning gap for receiving the first cantilever 510 is formed between the first boss 211 and the second boss 212. During assembly of the stylus, the tip 300, the main shaft assembly 400, the sensing frame 500, the strain gauge 700, and the main board 600 of the control assembly may be pre-installed on the main frame 200, and then the main frame 200 is installed into the barrel 100. This configuration facilitates the assembly of the stylus.

To further facilitate the installation of the stylus, the frame body includes the first bracket 210 and the second bracket 220 that are snap-fitted to each other. The tip 300, the main shaft assembly 400, the sensing frame 500, the strain gauge 700, and the main board 600 of the control assembly are sequentially disposed on the side of the first bracket 210 adjacent to the second bracket 220. The second bracket 220 is snap-fitted to the first bracket 210. The second bracket 220 is configured to retain the tip 300, the main shaft assembly 400, the sensing frame 500, the strain gauge 700, and the main board 600 of the control assembly on the first bracket 210. Thus, the installation of the tip 300, the main shaft assembly 400, the sensing frame 500, the strain gauge 700, and the main board 600 of the control assembly is relatively convenient.

The first boss 211 and the second boss 212 are disposed on the side of the first bracket 210 adjacent to the second bracket 220. The first boss 211 is spaced apart in front of the second boss 212 (i.e., the first boss 211 is closer to the tip 300 than the second boss 212), so as to form the positioning gap therebetween. When the sensing frame 500 is installed on the first bracket 210, the first cantilever 510 is fixedly snapped into the positioning gap between the first boss 211 and the second boss 212. Thus, the sensing frame 500 is conveniently mounted on the first bracket 210.

Referring to Figs. 13 and 14, the first cantilever 510 includes a first fixing piece 511, a second fixing piece 512, and a bent portion 513. The first fixing piece 511 and the second fixing piece 512 are located on the same side of the deformation beam 520 and the static beam 540. The first fixing piece 511 is connected to the rear end of the deformation beam 520 (i.e., the end of the deformation beam 520 away from the tip 300). The second fixing piece 512 is connected to the front end of the static beam 540 (i.e., the end of the static beam 540 close to the tip 300). The first fixing piece 511 and the second fixing piece 512 are disposed parallel to each other to form the positioning gap. One end of the bent portion 513 is connected to the end of the first fixing piece 511 away from the deformation beam 520, and the other end of the bent portion 513 is connected to the end of the second fixing piece 512 away from the static beam 540. A deformation gap is formed between the first fixing piece 511 and the second fixing piece 512.

Therefore, when the sensing frame 500 is installed on the first bracket 210, the first fixing piece 511 and the second fixing piece 512 are simultaneously snapped into the positioning gap between the first boss 211 and the second boss 212. The first fixing piece 511 abuts against the side surface of the first boss 211, and the second fixing piece 512 abuts against the side surface of the second boss 212. In this configuration, the deformation gap is formed between the first fixing piece 511 and the second fixing piece 512. This arrangement permits the first fixing piece 511 and the second fixing piece 512 to deform elastically relative to one another, thereby allowing them to be securely snapped into the positioning gap between the first boss 211 and the second boss 212.

It should be noted that the first cantilever 510 adopts the structural configuration including the first fixing piece 511 and the second fixing piece 512 connected via the bent portion 513. With this configuration, when the main shaft assembly 400 drives the deformation beam 520 to deform, the first cantilever 510 can dissipate the force using the bent portion 513, and the second fixing piece 512 prevents the reaction force from being transmitted to the static beam 540, thereby preventing the static beam 540 from undergoing slight deformation, and further preventing the second bridge arm resistors 730 from deforming.

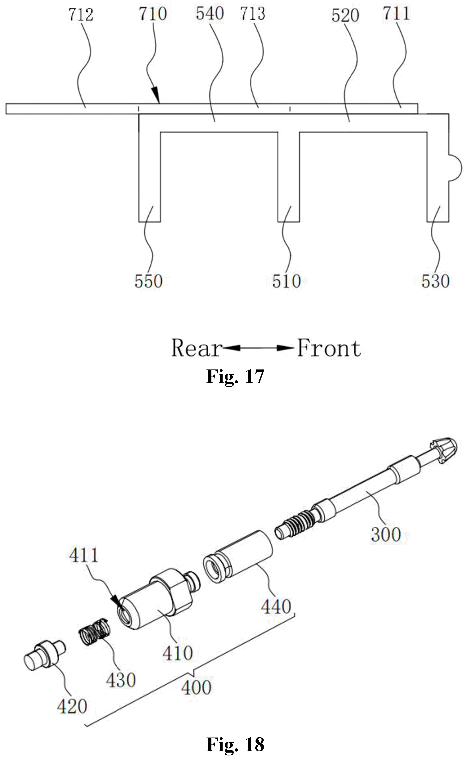

In other embodiments, referring to Fig. 17, the first cantilever 510 may also be configured as a plate-shaped structure between the deformation beam 520 and the static beam 540. With this configuration, the sensing frame 500 has a simple structure and is relatively convenient to assemble.

Referring to Figs. 13 and 14 again, the sensing frame 500 further includes a third cantilever 550. The third cantilever 550 has a sheet-shaped structure. One end of the third cantilever 550 is connected to the rear end of the static beam 540 (i.e., the end of the static beam 540 away from the tip 300). A fixing gap for engaging the second boss 212 is formed between the first cantilever 510 and the third cantilever 550. Therefore, when the sensing frame 500 is assembled to the first bracket 210, the second boss 212 is snap-fitted and fixed into the fixing gap between the first cantilever 510 and the third cantilever 550. With this configuration, the third cantilever 550 further stabilizes the position of the static beam 540, thereby preventing the static beam 540 from bending, and further avoiding deformation of the second bridge arm resistors 730. Moreover, the sensing frame 500 is also relatively convenient to assemble with the first bracket 210.

The first cantilever 510, the second cantilever 530, and the third cantilever 550 are disposed on the same side of the sensing frame 500. More specifically, the first cantilever 510, the second cantilever 530, and the third cantilever 550 are located on the side of the sensing frame 500 away from the second bracket 220, and the strain segment 711 and the static segment 713 are attached to the other side of the sensing frame 500. That is, the strain segment 711 is attached to the side of the deformation beam 520 away from the first bracket 210, and the static segment 713 is attached to the side of the static beam 540 away from the first bracket 210. It can be understood that the first cantilever 510, the second cantilever 530, and the third cantilever 550 are disposed on the same side of the sensing frame 500, and the strain gauge 700 is disposed on the other side of the sensing frame 500, this arrangement effectively avoids interference among the strain gauge 700 and the first cantilever 510, the second cantilever 530, and the third cantilever 550, thereby facilitating the disposition of the strain gauge 700 on the sensing frame 500 for connection to the main board 600 of the control assembly. Moreover, with this structural configuration of the sensing frame 500, the projections of the first cantilever 510, the second cantilever 530, and the third cantilever 550 overlap in the axial direction, so the sensing frame 500 occupies a small area within the cross-section of the stylus, allowing the stylus to be manufactured in a smaller size.

One of the side wall of the second cantilever 530 and the end portion of the main shaft assembly 400 is provided with the arc-shaped protrusion 531, and the arc-shaped protrusion 531 abuts against the other of the side wall of the second cantilever 530 and the end portion of the main shaft assembly 400. For example, the arc-shaped protrusion 531 may be provided on the front side surface of the second cantilever 530, and the end portion of the main shaft assembly 400 abuts against the second cantilever 530 via the arc-shaped protrusion 531.

Alternatively, the arc-shaped protrusion 531 may be provided on the rear end of the main shaft assembly 400, and the end portion of the main shaft assembly 400 abuts against the second cantilever 530 via the arc-shaped protrusion 531. It can be understood that the second cantilever 530 abuts against the main shaft assembly 400 via the arc-shaped protrusion 531. This arrangement minimizes interference with the movement of the second cantilever 530 when the main shaft assembly 400 acts on the second cantilever 530, thereby ensuring that the force transmitted by the main shaft assembly 400 can be well fed back to the elastic deformation of the deformation beam 520, and further accurately obtaining a corresponding electrical signal to be input to the main board 600 of the control assembly.

Based on the above Embodiments 1 to 3, the specific structural designs of the main shaft assembly 400 and the main board 600 of the control assembly may include but are not limited to the following configurations.

Referring to Figs. 3, 7, and 12, the end of the main board 600 close to the sensing frame 500 is provided with a U-shaped notch 610. A portion of the sensing frame 500 is located within the notch 610. For example, the first cantilever 510 and a portion of the deformation beam 520 are located within the notch 610. With this arrangement, the main board 600 and the sensing frame 500 are compactly assembled together, saving space inside the barrel 100 to reserve sufficient space for the installation of other modules, such as batteries and signal electrodes.

Referring to Figs. 3, 7, 12, and 18, the main shaft assembly 400 includes a first shaft member 410, a second shaft member 420, and an elastic member 430. The first shaft member 410 is provided with a guide hole 411 extending axially. The guide hole 411 penetrates only the rear end of the first shaft member 410. The second shaft member 420 is slidably disposed on the first shaft member 410 through the guide hole 411. The elastic member 430 is located within the guide hole 411. The front end of the elastic member 430 abuts against the bottom of the guide hole 411 (i.e., abuts against the first shaft member 410), and the rear end of the elastic member 430 abuts against the front end of the second shaft member 420. The end of the first shaft member 410 away from the second shaft member 420 is connected to the connection end, and the end of the second shaft member 420 away from the first shaft member 410 abuts against the second cantilever 530.

It can be understood that the elastic member 430 may be a spring with a relatively large elastic coefficient. The first shaft member 410 and the second shaft member 420 are elastically and slidably connected via the elastic member 430. With this configuration, when the force exerted by the tip 300 on the screen is relatively large, the elastic member 430 can be compressed, thereby preventing the tip 300 from excessively pressing against the screen. Moreover, because the elastic member 430 has a relatively large elastic coefficient, it will not be compressed during normal use of the stylus, thereby ensuring good user experience. Further, to facilitate the connection between the main shaft assembly 400 and the tip 300, the main shaft assembly 400 further includes a connector 440. The connection end of the tip 300 is threadedly connected to the front end portion of the connector 440, and the front end portion of the first shaft member 410 is snap-fitted to the rear end portion of the connector 440. Alternatively, the connection end of the tip 300 is snap-fitted to the front end portion of the connector 440, and the front end portion of the first shaft member 410 is threadedly connected to the rear end portion of the connector 440. It can be understood that during assembly of the main shaft assembly 400 and the tip 300 to the first bracket 210, the connector 440 is first pre-connected to the tip 300 or the main shaft assembly 400, and the tip 300 is pre-installed on the first bracket 210. The main shaft assembly 400 is then connected to the tip 300 via the connector 440, thereby assembling the main shaft assembly 400 to the first bracket 210. The connector 440 is connected to the first shaft member 410 and the tip 300 using different connection methods. This design ensures that the first shaft member 410 and the tip 300 do not interfere with each other when connected to the connector 440, allowing the aforementioned assembly method to be implemented more conveniently. Referring to Figs. 3, 7, and 12, the stylus further includes a first electrode 800. The first electrode 800 includes a first spring member 810 and a first extension arm 820 that are connected. The first spring member 810 is sleeved outside the second shaft member 420. The rear end portion of the first spring member 810 abuts against the first shaft member 410 to keep the second shaft member 420 in abutment with the second cantilever 530. The first extension arm 820 is disposed on the first bracket 210 along the axial direction. The first extension arm 820 is electrically connected to the main board 600. Thus, the first spring member 810 is electrically connected to the main board 600 via the first extension arm 820, and the first spring member 810 can serve as a signal electrode of the stylus.

Referring to Figs. 3, 7, and 12, the stylus further includes a second electrode 900. The second electrode 900 includes a second spring member 910 and a second extension arm 920 that are connected. The second spring member 910 is sleeved on the head of the tip 300 and is configured in a conical shape. The second spring member 910 exactly fits within the housing of the head of the tip 300. The second extension arm 920 is disposed on the first bracket 210 along the axial direction. The second extension arm 920 is electrically connected to the main board 600. Thus, the second spring member 910 is electrically connected to the main board 600 via the second extension arm 920, and the second spring member 910 can serve as the signal electrode of the stylus.

Referring to Figs. 1 to 4, the present disclosure further provides a strain gauge assembly. The strain gauge assembly is applied to the stylus. The strain gauge assembly includes the sensing frame 500 and the strain gauge 700. The sensing frame 500 includes the deformation beam 520 and at least one cantilever connected to the deformation beam 520. The deformation beam 520 extends along the preset direction and is configured to be connected to the main frame 200 of the stylus. At least one cantilever is connected to the main shaft assembly 400 of the stylus. The strain gauge 700 is disposed on the deformation beam 520. When the tip 300 of the stylus moves relative to the barrel 100 of the stylus along the preset direction, at least one cantilever is driven to move by the main shaft assembly 400 of the stylus, causing the deformation beam 520 and the strain gauge 700 to undergo elastic deformation, whereby the control assembly of the stylus detects the elastic deformation of the strain gauge 700 to obtain the writing force of the tip 300 of the stylus relative to the screen. It can be understood that the specific structural features of the strain gauge assembly provided by the embodiment of the present disclosure have been described in detail in the embodiments of the stylus shown in Figs. 1 to 18, and thus will not be repeated here.

The technical solutions disclosed in the present disclosure are not limited to those disclosed in the above embodiments, but also include technical solutions formed by any combination of the above technical features. It should be noted that a person skilled in the art may make various improvements and modifications without departing from the spirit of the disclosure, and such improvements and modifications are also considered to fall within the scope of the disclosure.

## Claims

1. A stylus, comprising:
a barrel;
a main frame;
a tip;
a main shaft assembly;
a strain gauge;
a control assembly; and
a sensing frame;
**characterized in that** the main frame is disposed within the barrel; and the tip is disposed on the main frame, and is configured to at least partially extend out of the barrel;
the main shaft assembly is disposed on the main frame, and is connected to the tip; and the main shaft assembly is configured to enable the tip to move relative to the barrel along a preset direction in response to a case that the stylus performs writing operation on a screen;
the control assembly is electrically connected to the strain gauge; and
the sensing frame comprises a deformation beam and at least one cantilever connected to the deformation beam, the deformation beam extends along the preset direction and is connected to the main frame, the at least one cantilever is connected to the main shaft assembly, and the strain gauge is disposed on the deformation beam; and
in response to a case that the tip moves relative to the barrel along the preset direction, the main shaft assembly is configured to drive the at least one cantilever to move to cause the deformation beam and the strain gauge to undergo elastic deformation, and the control assembly is configured to detect the elastic deformation of the strain gauge to obtain a writing force of the tip relative to the screen.

2. The stylus according to claim 1, **characterized in that** the strain gauge comprises an electrical connection member and at least one resistor;
the electrical connection member comprises a strain segment and a connection segment connected to the strain segment, the strain segment is attached to one side of the deformation beam, and the connection segment is electrically connected to the control assembly; and
the at least one resistor is disposed on the strain segment; in response to a case that the tip moves relative to the barrel along the preset direction, the main shaft assembly is configured to drive the at least one cantilever to move to cause the deformation beam and the at least one resistor to undergo elastic deformation.

3. The stylus according to claim 2, **characterized in that** the at least one resistor comprises two first bridge arm resistors;
the two first bridge arm resistors are arranged spaced apart on the strain segment along a first direction to form a half-bridge structure on the electrical connection member; and
in response to a case that the tip moves relative to the barrel along the preset direction, the main shaft assembly is configured to drive the at least one cantilever to move to cause the deformation beam and the two first bridge arm resistors to undergo elastic deformation.

4. The stylus according to claim 3, **characterized in that** the deformation beam is configured as a sheet-shaped structure;
the two first bridge arm resistors are each configured as a rectangular sheet-shaped structure extending along a second direction, with two short sides electrically connected to the strain segment; and
the second direction is perpendicular to the first direction, and the second direction is the same as the preset direction.

5. The stylus according to claim 3, **characterized in that** the at least one resistor further comprises two second bridge arm resistors;
the two second bridge arm resistors are arranged spaced apart on the strain segment along a second direction to form an electrical bridge structure on the electrical connection member with the two first bridge arm resistors;
in response to a case that the tip moves relative to the barrel along the preset direction, the main shaft assembly is configured to drive the at least one cantilever to move to cause the deformation beam and the two second bridge arm resistors to undergo elastic deformation; and
the first direction intersects the second direction.

6. The stylus according to claim 5, **characterized in that** the two first bridge arm resistors are each configured as a rectangular sheet-shaped structure, with two short sides electrically connected to the strain segment;
the two second bridge arm resistors are each configured as a rectangular sheet-shaped structure, with two short sides electrically connected to the strain segment; and
the first direction is perpendicular to the second direction.

7. The stylus according to claim 6, **characterized in that** the two first bridge arm resistors are each configured as a rectangular sheet-shaped structure extending along the second direction, and the two second bridge arm resistors are each configured as a rectangular sheet-shaped structure extending along the first direction, and the first direction is the same as the preset direction; or
the two first bridge arm resistors are each configured as a rectangular sheet-shaped structure extending along the first direction, and the two second bridge arm resistors are each configured as a rectangular sheet-shaped structure extending along the second direction, and the second direction is the same as the preset direction.

8. The stylus according to any one of claims 1 to 7, **characterized in that** the at least one cantilever comprises a second cantilever; and
the second cantilever is connected to an end of the deformation beam close to the tip, and the main shaft assembly abuts against the second cantilever; and in response to a case that the tip moves relative to the barrel along the preset direction, the main shaft assembly is configured to drive the second cantilever to move.

9. The stylus according to claim 8, **characterized in that** the at least one cantilever further comprises a first cantilever; the first cantilever is connected to an end of the deformation beam away from the tip, and the second cantilever and the first cantilever are located on a same side of the deformation beam; and
the main frame comprises a frame body, a first boss and a second boss; the tip, the main shaft assembly, the sensing frame and the control assembly are sequentially disposed on the frame body along the preset direction, the first boss and the second boss are arranged spaced apart on the frame body, and a positioning gap for receiving the first cantilever is formed between the first boss and the second boss.

10. The stylus according to claim 3, **characterized in that** the electrical connection member further comprises a static segment located between the strain segment and the connection segment, the static segment is connected to the strain segment and the connection segment, and the static segment is disposed spaced apart from the deformation beam; and
the at least one resistor further comprises two second bridge arm resistors; the two second bridge arm resistors are arranged spaced apart on the static segment along the first direction to form an electrical bridge structure on the electrical connection member with the two first bridge arm resistors; and the two second bridge arm resistors are configured to be free from elastic deformation in response to a case that the deformation beam and the two first bridge arm resistors undergo elastic deformation.

11. The stylus according to claim 10, **characterized in that** the at least one cantilever comprises a second cantilever;
the second cantilever is connected to an end of the deformation beam close to the tip, and the main shaft assembly abuts against the second cantilever; and
in response to a case that the tip moves relative to the barrel along the preset direction, the main shaft assembly is configured to drive the second cantilever to move to cause the deformation beam and the two first bridge arm resistors to undergo elastic deformation.

12. The stylus according to claim 11, **characterized in that** the at least one cantilever further comprises a first cantilever, and the first cantilever is connected to an end of the deformation beam away from the tip;
the sensing frame further comprises a static beam; the static beam and the deformation beam are arranged on a same side of the main frame, and are configured to extend along the preset direction; the first cantilever is connected to an end of the static beam close to the tip, and is connected to the main frame; the second cantilever and the first cantilever are located on a same side of the deformation beam and the static beam, and the static segment is attached to the static beam.

13. The stylus according to claim 12, **characterized in that** the two first bridge arm resistors are each configured as a rectangular sheet-shaped structure extending along a second direction, with two short sides electrically connected to the strain segment; and the two second bridge arm resistors are each configured as a rectangular sheet-shaped structure extending along the second direction, with two short sides electrically connected to the static segment; and
the second direction is perpendicular to the first direction, and the second direction is the same as the preset direction.

14. The stylus according to claim 12, **characterized in that** the first cantilever comprises a first fixing piece, a second fixing piece and a bent portion; and
the first fixing piece and the second fixing piece are located on a same side of the deformation beam and the static beam; the first fixing piece is connected to the end of the deformation beam away from the tip, and the second fixing piece is connected to the end of the static beam close to the tip; a first end of the bent portion is connected to an end of the first fixing piece away from the deformation beam, and a second end of the bent portion is connected to an end of the second fixing piece away from the static beam; and a deformation gap is formed between the first fixing piece and the second fixing piece.

15. The stylus according to claim 12, **characterized in that** the main frame comprises a frame body, a first boss and a second boss; and
the tip, the main shaft assembly, the sensing frame and the control assembly are sequentially disposed on the frame body along the preset direction; the first boss and the second boss are arranged spaced apart on the frame body; and a positioning gap for receiving the first cantilever is formed between the first boss and the second boss.

16. The stylus according to claim 15, **characterized in that** the first boss is closer to the tip than the second boss; and
the sensing frame further comprises a third cantilever; the third cantilever is connected to an end of the static beam away from the tip; and a fixing gap for engaging the second boss is formed between the third cantilever and the first cantilever.

17. The stylus according to claim 11, **characterized in that** one of a side wall of the second cantilever and an end of the main shaft assembly is provided with an arc-shaped protrusion; and the arc-shaped protrusion abuts against the other one of the side wall of the second cantilever and the end of the main shaft assembly.

18. The stylus according to claim 2, **characterized in that** the electrical connection member is a flexible printed circuit (FPC), and the strain segment and the connection segment are configured as an integrally-formed FPC structure.

19. The stylus according to claim 18, **characterized in that** the at least one resistor is a printed resistor formed on the FPC of the strain segment or a flat resistance wire disposed on the FPC of the strain segment.

20. A strain gauge assembly, the strain gauge assembly being applied to a stylus, and the strain gauge assembly comprising:
a sensing frame; and
a strain gauge;
**characterized in that** the sensing frame comprises a deformation beam and at least one cantilever connected to the deformation beam; the deformation beam extends along a preset direction, and is connected to a main frame of the stylus, and the at least one cantilever is connected to a main shaft assembly of the stylus;
the strain gauge is disposed on the deformation beam; and
in response to a case that a tip of the stylus moves relative to a barrel of the stylus along the preset direction, the at least one cantilever is configured to be driven by the main shaft assembly of the stylus to move to cause the deformation beam and the strain gauge to undergo elastic deformation, and a control assembly of the stylus is configured to detect the elastic deformation of the strain gauge to obtain a writing force of the tip of the stylus relative to a screen.
